# EUROPÄISCHE PATENTSCHRIFT

(11) **EP 2 025 479 B1**
(45) Veröffentlichungstag und Bekanntmachung des Hinweises auf die Patenterteilung: **22.09.2010**
(21) Anmeldenummer: 08013535.3
(22) Anmeldetag: 28.07.2008
(51) Int. Cl.: B25J 15/10

(54) **Verfahren und Vorrichtung zum Manipulieren eines elastischen Ringes**
Method and device for manipulating an elastic ring
Procédé et dispositif de manipulation d'un anneau élastique

(30) Priorität: 06.08.2007 DE 102007036860
(43) Veröffentlichungstag der Anmeldung: 18.02.2009
(73) Patentinhaber: FMB Maschinenbaugesellschaft mbH & CO. KG, 97906 Faulbach (DE)
(72) Erfinder: Ackermann, Stephen, 97901 Allenbuch (DE); Dobrov, Nikolaus, 97906 Faulbach (DE)
(74) Vertreter: Blumbach - Zinngrebe

(56) Entgegenhaltungen:
- JP-A- 2000 296 425
- US-B1- 6 494 516

## Beschreibung

Die Erfindung betrifft ein Verfahren zum Einbringen eines vorgegebenen elastischen Ringes in eine vorgegebene Position, die durch eine in eine im Wesentlichen ebene Fläche eingelassene Ringnut definiert ist, sowie eine Vorrichtung zur Durchführung des Verfahrens.

Anlagen zur Automatisierung von Montagevorgängen bei Baugruppen und Geräten werden häufig unter Einbezug von Industrierobotern erstellt. Dies hat seinen Grund in der hohen Flexibilität dieser Roboteranlagen, insbesondere in der hohen Genauigkeit, mit der Arbeitsmittel, wie zum Beispiel Greifer oder Schraubsysteme, positioniert werden können. Dabei gibt es für Greifersysteme zahlreiche und sehr variantenreiche Lösungen, die je nach Bedarf eingesetzt werden. Bauartbedingt sind die bekannten Greiferanordnungen für feste, weitgehend unelastische Bauteile vorgesehen, für elastische Bauteile mit unbestimmten Konturen und mangelnder Gestaltfestigkeit gibt es nur wenige Anordnungen, die außerdem nur für spezielle Einzelfälle geeignet sind.

Ein häufiges elastisches Bauteil in diesem Sinn ist der O-Ring. Seine Handhabung stellt ein wichtiges Problemfeld bei der Automatisierung von Montagevorgängen dar.
Aus der US-A-6 494 516 und der JP-A-2000 296 425 sind Verfahren und Vorrichtungen zur Außenmontage von O-Ringen bekannt, bei denen ein O-Ring durch mehrere in Umfangsrichtung beabstandete und radial bewegliche Finger an seinen Innenumfang erfasst und unter Vorspannung an eine vorgegebene Position gebracht wird. Der Erfindung liegt daher die Aufgabe zugrunde, einen vorgegebenen elastischen Ring in eine vorgegebene Position, die durch eine in eine Planfläche eingebrachte Ringnut definiert ist, sicher und genau zu manipulieren.

Diese Aufgabe wird erfindungsgemäß durch ein Verfahren gemäß Anspruch 1 gelöst. Dabei wird der Ring durch mehrere in Umfangsrichtung beabstandete und radial bewegliche Finger an seinem Innenumfang erfasst und an die Position gebracht wird. Zweckmäßig wird der an die Position gebrachte Ring von wenigstens einer axial beweglichen Backe in die Position gedrückt. Vorteilhaft ist auch, wenn der an die Position gebrachte Ring von wenigstens einer axial beweglichen Backe von den Fingern axial abgestreift wird.

Eine zur Durchführung des erfindungsgemäßen Verfahrens geeignete Vorrichtung ist im Anspruch 4 definiert. Zweckmäßig sind an der Stirnfläche wenigstens zwei bezüglich der Mittellinie gegenüberliegende und radial bewegliche Backen vorgesehen, welche den an die Position gebrachten Ring in die Position drücken oder den Ring von den Fingern wenigstens axial abstreifen.

Zweckmäßig ist, wenn an der Stirnfläche des Greifers weitere in Umfangsrichtung voneinander beabstandete, bezüglich der Mittellinie radial verschiebliche und gleich lange Backen vorhanden sind. Eine besonders einfache Bauweise ergibt sich, wenn in Weiterbildung der Erfindung in jeder Backe je ein relativ zur zugehörigen Backe axial elastischer Finger beherbergt ist. Vorteilhaft ist, wenn für alle Finger eine axiale Hubbegrenzung vorgesehen ist, die in einfacher Weise dadurch realisiert sein kann, dass für jeden Finger in der zugehörigen Backe eine separate Hubbegrenzung ausgebildet ist.

Im Übrigen sind vorteilhafte Ausgestaltungen der Erfindung in den beigefügten Unteransprüchen angegeben. Nachstehend wird die Erfindung ohne Beschränkung ihrer Allgemeinheit an einem in der Zeichnung dargestellten Ausführungsbeispiel beschrieben. Es zeigen:

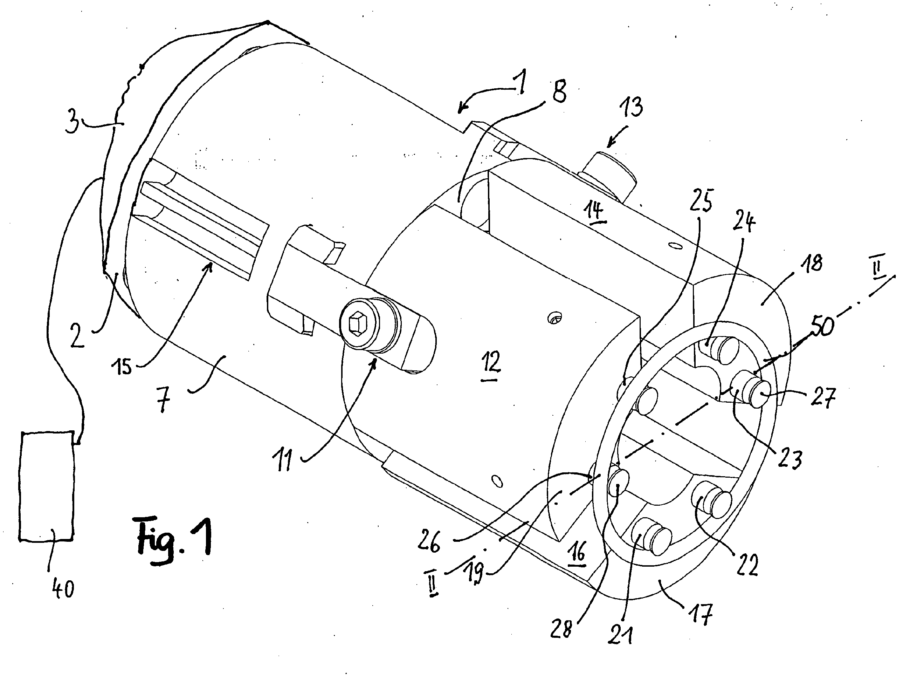

Figur 1: eine schematische perspektivische Ansicht eines Greifers mit Fingern und Backen;
Figur 2: eine schematische Seitenansicht des Greifers mit Fingern und längs der Ebene II-II axial geschnittenen Backen in einer anfänglichen Betriebsstellung;
Figur 3: eine der Figur 2 ähnliche Ansicht, bei der sich die Finger und Backen in einer weiteren Betriebsstellung befinden;

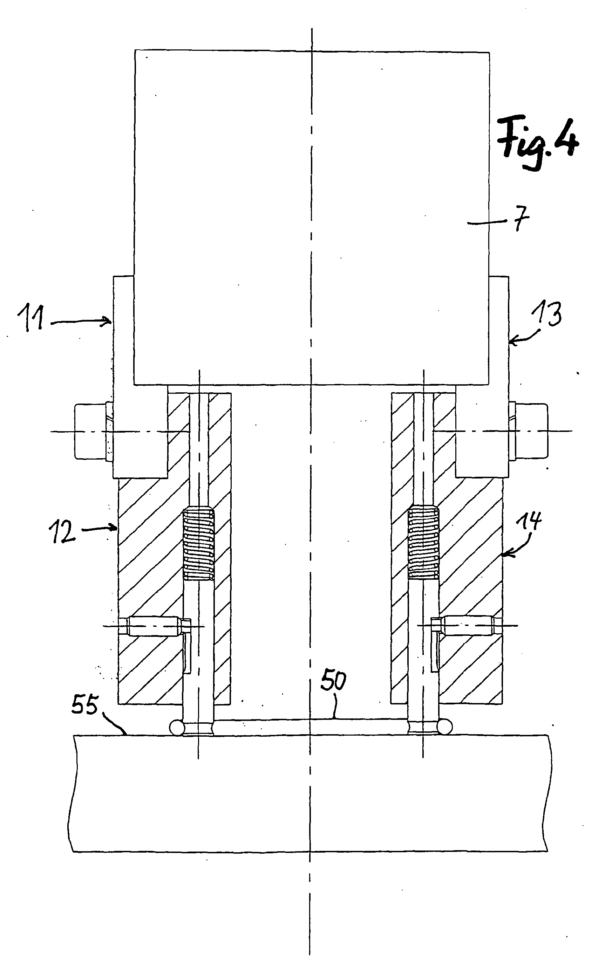

Figur 4: eine der Figur 2 ähnliche Seitenansicht, bei sich die Backen und die Finger in noch einer weiteren Betriebsstellung befinden;

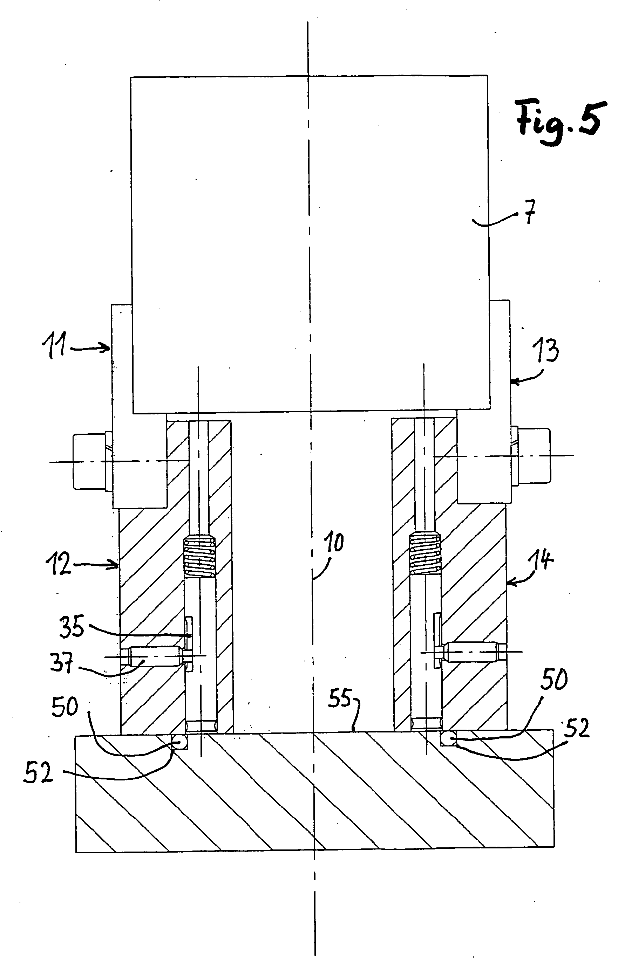

Figur 5: eine der Figur 2 ähnliche Seitenansicht, bei sich die Backen in einer anschließenden Betriebsstellung befinden; und
Figur 6 eine der Figur 2 ähnliche Seitenansicht zur Erläuterung der Aufnahme eines Ringes von einer Planfläche.

Der im Ganzen mit 1 bezeichnete, einen im Wesentlichen zylindrischen Korpus 7 aufweisende Greifer ist an seiner Rückseite drehfest, jedoch lösbar mit einer Kupplungsplatte 2 eines nur schematisch angedeuteten Roboter- oder Manipulatorarms 3 verbunden, der durch eine Steuerung 40 in die drei Orthogonalrichtungen des Raumes verstell- und verschiebbar ist.

An der Stirnfläche 8 des Korpus 7 sind drei in Umfangsrichtung gleich beabstandete und gleich ausgebildete Backen 12, 14, 16 befestigt, deren Formen geometrisch Segmente eines gedachten Zylinders darstellen. Jede Backe ist über genau einen Schieber 11, 13 (der dritte Schieber ist aufgrund der Art der Darstellung nicht sichtbar) mit dem Korpus 7 des Greifers axial fest verbunden. An der Außenperipherie des Korpus 7 sind für jeden Schieber 11, 13 je eine radiale Führung 15 ausgebildet, längs der der zugehörige Schieber 11, 13 und mit ihm die mit ihm verbundene Backe bezüglich der Mittellinie radial um eine vorgegebene Strecke verschieblich ist. Die Länge der Strecke bestimmt sich vornehmlich nach der Stärke der Backen und kann etwa 10...20mm betragen.

Aus jeder freien Backenstirnfläche 17, 18, 19 stehen je zwei im Wesentlichen zylindrische Finger, also insgesamt sechs Finger 21, 22, 23, 24, 25, 26 axial und gleich lang vor, die in Umfangsrichtung gleich beabstandet sind. Jeder Finger endet in einer freien Frontfläche derart, dass alle Frontflächen aller Finger zusammen eine Ebene definieren, die sich im Wesentlichen quer zur Mittellinie 10 des Greifers erstreckt. Zur Vereinfachung der Darstellung sind nur die Frontflächen der gegenüberliegenden Finger 23 und 26 mit 27, 28 bezeichnet.

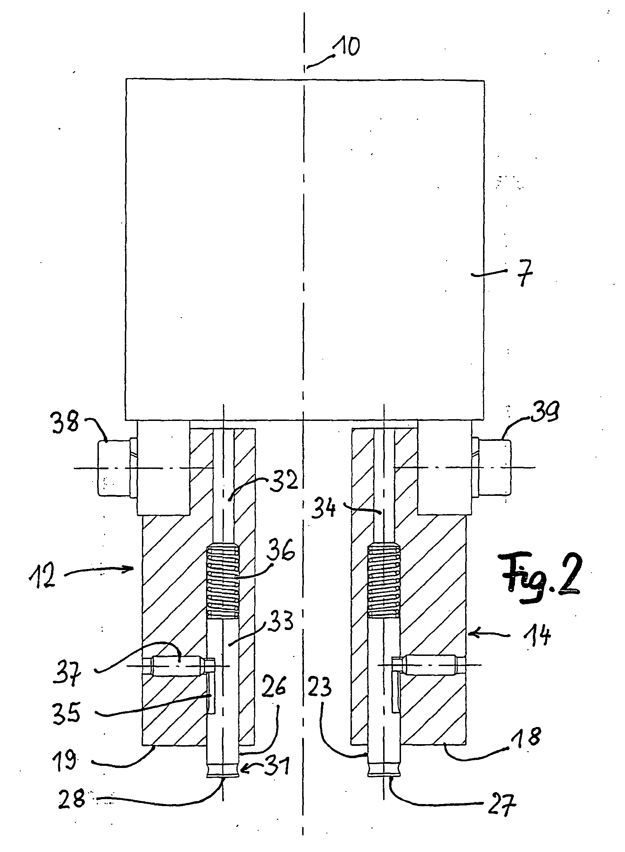

Wie man Figur 2 entnimmt, sind die einander gegenüberliegenden axial geschnittenen Backen 12, 14 mit je zwei axialen Durchgangsbohrungen versehen, von denen in der Schnittdarstellung der Figur 2 nur eine Durchgangsbohrung 32 in der Backe 12 und nur eine Durchgangsbohrung 34 in der Backe 14 zu erkennen sind. In jeder Durchgangsbohrung ist der zylindrische Schaft eines zugehörigen Fingers beherbergt, so etwa in der Durchgangsbohrung 32 der Schaft 33 des Fingers 26. Im Einzelnen ist die Durchgangsbohrung 32 etwa am inneren Ende ihres oberen Drittels radial unter Ausbildung einer Schulter erweitert, auf welcher sich ein Ende einer Spiralfeder 36 abstützt. Mit ihrem anderen Ende liegt die Spiralfeder 36 auf der Rückseite des Schaftes 33 auf. Längs seiner Peripherie weist der Schaft 33 eine Längsnut 35 auf, in welche ein radial von außen durch die Backe 14 getriebener Dorn 37 eingreift. Die Kombination aus Dorn 37 und Längsnut 35 wirkt als Hubbegrenzung dergestalt, dass eine axiale Relativbewegung von Schaft 33 zur Backe 12 auf die Länge der Nut 35 begrenzt ist. Wie ohne weiteres ersichtlich sind die weiteren Durchgangsbohrungen in den Backen zur Aufnahme der Schafte der Finger und der Spiralfedern und die Längsnuten in den Schaften der weiteren Finger sowie die zugehörigen Dorne genauso gestaltet wie anhand der Durchgangsbohrung 32 vorstehend erläutert ist.

Der unterste an die Frontfläche 27 angrenzende Schaftabschnitt 31 ist in Anpassung an die runde Querschnittsform des vom Greifer 1 aufzunehmenden O-Ringes 50 profiliert, hier mit einer umlaufenden Kehle versehen. Andere Querschnittsformen des zu manipulierenden Ringes lassen andere entsprechend angepasste Gestaltungen des Schaftabschnittes 31 als zweckmäßig erscheinen.

Im Übrigen zeigt Figur 2 schematisch den Korpus 7 des Greifers 1 sowie die Schieber 11 und 13, an denen die Backen 12, 14 mit Bolzen 38, 39 befestigt sind. Nicht im Einzelnen dargestellt sind diejenigen Mittel, die den Schiebern 11, 13 eine radiale Bewegung bezüglich der Mittellinie 10 ermöglichen. Eine radiale Bewegung der Schieber hat die Folge, dass dieser radialen Bewegung die mit dem jeweiligen Schieber verbundenen Backen und die in ihnen beherbergten Finger folgen.

Die soweit beschriebene Vorrichtung arbeitet wie folgt: Ein O-Ring 50 möge sich an einer beliebigen Warteposition, beispielsweise innerhalb eines O-Ringspeichers befinden. Die Maschinensteuerung erhalte den Auftrag, einen O-Ring 50 aus dem Speicher zu holen und in eine Ringnut 52 einzusetzen, die in einer hier im Wesentlichen ebenen Oberfläche 55 eines bereitgehaltenen beispielsweise quaderförmigen Werkstückes 54 ausgebildet ist. Die Maschinensteuerung 40 veranlaßt den Roboter- oder Manipulatorarm 3, den Greifer 1 so in den O-Ring 50 zu fahren, dass alle Finger 21, 22, 23, 24, 25, 26 gegebenenfalls mit radialem Abstand vom O-Ringes 50 umschlossen sind. In den Backenstirnflächen 17, 18, 19 können dazu nicht dargestellte Näherungsschalter eingebaut sein, die auf deine Annäherung der Backen an den O-Ring 50 ansprechen.

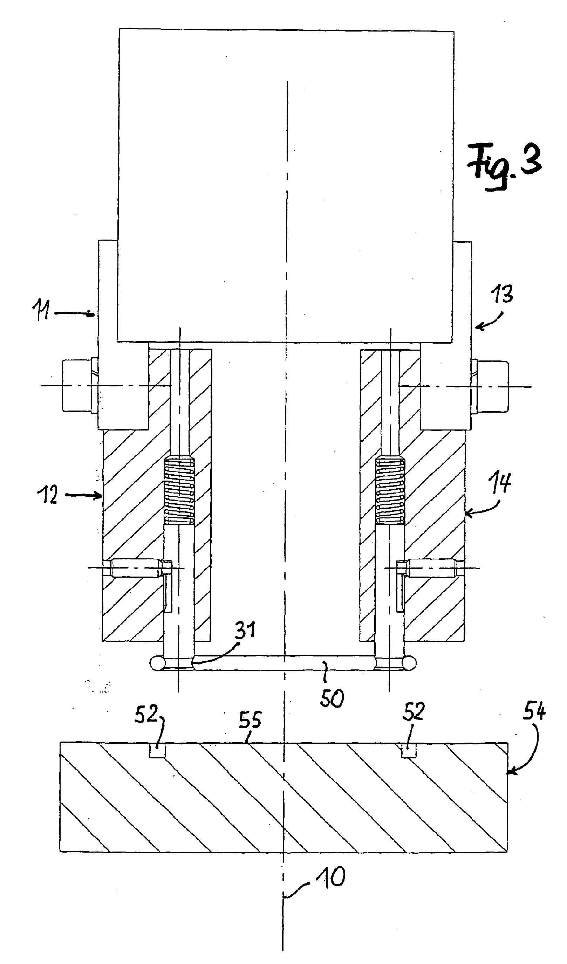

In der zweiten Betriebsphase werden die Schieber 11, 13 von der Maschinensteuerung 40 veranlaßt, bezüglich der Mittellinie 10 soweit nach radial außen zu fahren, bis die Schaftabschnitte 31 den O-Ring 50 an seinem Innenumfang ergreifen. Die zugehörige Betriebsphase zeigt Figur 3. Während der anschließenden Betriebsphase veranlaßt die Maschinensteuerung 40 den Manipulator 3, den Greifer 1 so vor die Oberfläche des Werkstückes 54 zu fahren, dass die Mittellinie 10 senkrecht auf der Oberfläche 55 des Werkstückes 54 und in der Mitte der Ringnut 52 steht. In der nächsten Betriebsphase wird der Greifer 1 in Richtung auf die Oberfläche 55 abgesenkt, bis zunächst die Frontflächen aller Finger, also beispielsweise die Frontflächen 27, 28, mit ergriffenem O-Ring 50 auf der Oberfläche 55 aufsitzen. Die fortgesetzte Absenkung des Greifers 1 mit Backen 12, 13, 14 führt zu einem Kontaktieren der Backenstirnflächen 17, 18, 19 mit dem O-Ring, einem Abstreifen des O-Ringes 50 von den unteren Schaftabschnitten 31 der Finger und gleichzeitigem Eindrücken des von den Fingern befreiten O-Ringes in die Ringnut 52. Während der fortgesetzten Absenkung werden die auf der Oberfläche 55 aufsitzenden Finger in das Innere der zugehörigen Durchgangsbohrung gegen die Wirkung der sich zunehmend komprimierenden Spiralfeder 36 axial aufwärts verschoben, wobei die axiale Länge der Längsnuten eine derartige Verschiebung gestattet.

Die Form des Schaftabschnittes 31 kann im Querschnitt ein halbkreisförmiges Profil haben, dessen Radius dem O-Ringdurchmesser entspricht. Andererseits kann auch ein prismenförmiger Einstich, vorzugsweise in Form einer 90°-Kerbe ohne weiteres vorgesehen sein. In diesem Fall ist es möglich, Ringe mit unterschiedlichen Durchmessern zu montieren. Weiterhin können Ringe mit unterschiedlichen Wulstdurchmessern und unterschiedlichen Wulstquerschnitten von den Fingern aufgenommen werden, vor allem wenn der Schaftabschnitt 31 als zylindrischer Absatz ausgebildet ist. In diesem Fall entsteht ein kraftschlüssiges Erfassen des Ringes durch die Finger. Zum sicheren Ergreifen des Ringes durch die Schaftabschnitte 31 kann der Ring 50 geringfügig durch die Schaftabschnitte 31 radial gedehnt werden und/oder die Schaftabschnitte 31 können mit einer Haftbeschichtung versehen sein. Wesentlich ist, dass der von den Fingern aufgenommene Ring 50 wenigstens teilweise über den Schaftdurchmesser radial vorsteht, damit der Ring durch die Backen von den Fingern abgestreift werden kann.

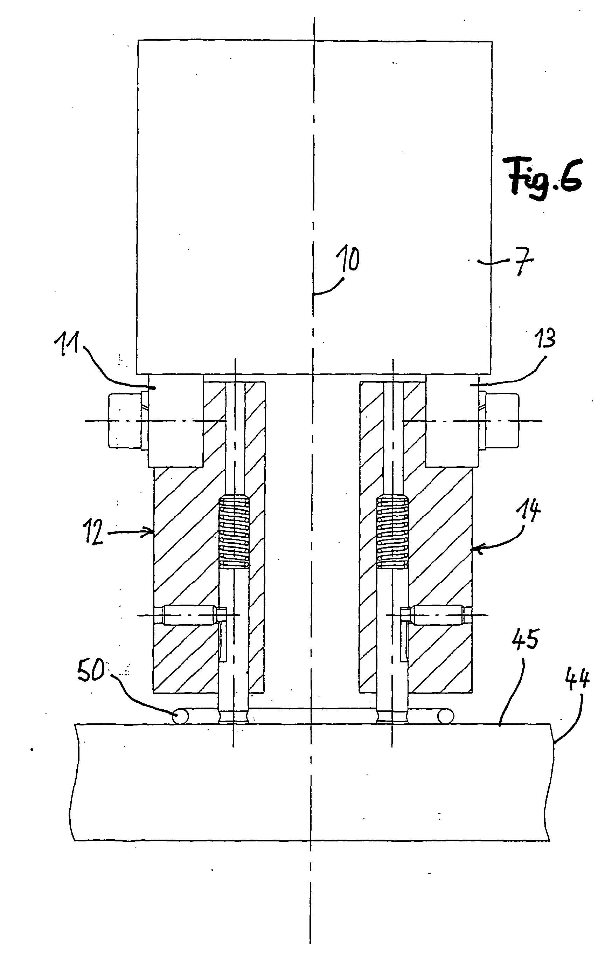

Figur 6 zeigt die Situation, dass der Ring 50 auf einer Planfläche 45 eines Werkstückes 44 zur Aufnahme durch die Finger bereitliegt. Die Führungen 11, 13 sind weit nach radial innen gefahren, so dass die Finger in die vom Ring umschlossene Fläche 45 eintauchen können. Sobald die Frontflächen der Finger die Planfläche 45 kontaktieren, fahren die Führungen 11, 13 nach radial außen, bis die Finger an dem Innenwulst des Ringes formschlüssig anliegen. Nach Wegbewegen des Greifers 1 von der Planfläche entsteht eine Situation gemäß Figur 3.

## Patentansprüche

1. Verfahren zum Einbringen eines vorgegebenen elastischen Ringes (50) in eine vorgegebene Position, die durch eine in eine im Wesentlichen ebene Fläche eingelassene Ringnut (52) definiert ist, bei welchem der Ring durch mehrere in Umfangsrichtung beabstandete und radial bewegliche Finger (21, 22, 23, 24, 25, 26) an seinem Innenumfang erfasst und an die Position gebracht wird, wobei bei jedem Finger an seinem freien Ende ein sich axial anschließender Schaftabschnitt (31) bereitgestellt wird, dessen Gestaltung, in Form eines Profils, eines Einstichs oder einer Kehle, zur Aufnahme des zu manipulierenden bzw. einzubringenden Ringes an dessen Querschnittsform entsprechend angepasst ist, und der Ring wenigstens teilweise über den Schaftabschnitt radial vorstehend aufgenommen wird.

2. Verfahren nach Anspruch 1, **dadurch gekennzeichnet, dass** der an die Position gebrachte Ring von wenigstens einer axial beweglichen Backe (12, 14, 16) in die Position gedrückt wird.

3. Verfahren nach Anspruch 1 oder 2, **dadurch gekennzeichnet, dass** der an die Position gebrachte Ring von wenigstens einer axial beweglichen Backe (12, 14, 16) von den Fingern axial abgestreift wird.

4. Vorrichtung zur Durchführung des Verfahrens nach einem oder mehreren der Ansprüche 1 bis 3, mit einem Greifer (1, 7), an dessen Stirnfläche (8) mehrere in Umfangsrichtung beabstandete, radial bewegliche Finger (21, 22, 23, 24, 25, 26) vorgesehen sind, deren freies Ende (31) zum kraft- oder formschlüssigen Erfassen des Ringes (50) an seinem Innenumfang gestaltet sind, sowie mit einer mechanischen und/oder elektronischen Bewegungssteuerung (40) für die Finger, wobei jeder Finger an seinem freien Ende einen sich axial anschließenden Schaftabschnitt (31) aufweist, dessen Gestaltung in Form eines Profils, eines Einstichs oder einer Kehle zur Aufnahme des zu manipulierenden bzw. einzubringenden Ringes an dessen Querschnittsform entsprechend angepasst ist.

5. Vorrichtung nach Anspruch 4, **dadurch gekennzeichnet, dass** an der Stirnfläche des Greifers wenigstens eine Backe (12, 14, 16) vorhanden ist, welche den an die Position gebrachten Ring von den Fingern axial abstreift und/oder in die Position drückt.

6. Vorrichtung nach Anspruch 5, **dadurch gekennzeichnet, dass** in der Backe mehrere Finger (23, 26) axial elastisch gelagert sind.

7. Vorrichtung nach Anspruch 6, **dadurch gekennzeichnet, dass** an der Stirnfläche des Greifers mehrere in Umfangsrichtung beabstandete und gleich lange Backen befestigt sind, wobei in jeder der Backen Finger axial elastisch gelagert sind.

8. Vorrichtung nach einem oder mehreren der Ansprüche 5 bis 7, **dadurch gekennzeichnet, dass** die oder alle Backen bezüglich einer Mittellinie (10) des Greifers radial beweglich ist/sind.

9. Vorrichtung nach einem oder mehreren der Ansprüche 4 bis 8, **dadurch gekennzeichnet, dass** eine Hubbegrenzung (35, 37) für eine Axialbewegung der Finger relativ zu der zugehörigen Backe (12) vorgesehen ist.

10. Vorrichtung nach Anspruch 9, **dadurch gekennzeichnet, dass** in jeder Backe für jeden Finger eine eigene Hubbegrenzung vorgesehen ist.

11. Vorrichtung nach einem oder mehreren der Ansprüche 4 bis 10, **dadurch gekennzeichnet, dass** jeder Finger an seinem freien Ende eine im Wesentlichen plane Frontfläche (27, 28) aufweist.

## Claims

1. Method for placing a preset elastic ring (50) into a predetermined position which is defined by an annular groove (52) incorporated into a substantially flat surface, wherein the ring is gripped at its inner circumference by several fingers (21, 22, 23, 24, 25, 26) which are radially movable and are spaced apart in the circumferential direction, and is brought to the position, wherein on the free end of each finger there is provided an axially adjoining shaft portion (31) whose shape - in the form of a profiled part, a recess or a channel - is adapted to accommodate the ring, which is to be manipulated or positioned, accordingly to suit its cross-sectional shape, and the ring is accommodated so as to radially protrude at least partly over the shaft portion.

2. Method as claimed in Claim 1, **characterised in that** the ring brought to the position is pressed into the position by at least one axially movable jaw (12, 14, 16).

3. Method as claimed in Claim 1 or 2, **characterised in that** the ring brought to the position is axially stripped from the fingers by at least one axially movable jaw (12, 14, 16).

4. Device for implementing the method as claimed in any one or several of Claims 1 to 3, having a gripper (1, 7), the end surface (8) of which is provided with several fingers (21, 22, 23, 24, 25, 26) which are radially movable and are spaced apart in the circumferential direction, the free ends (31) of the fingers being formed so as to grip the ring (50) in a non-positive-locking or positive-locking manner at its inner circumference, and having a mechanical and/or electronic movement controller (40) for the fingers, wherein on the free end of each finger there is provided an axially adjoining shaft portion (31) whose shape - in the form of a profiled part, a recess or a channel - is adapted to accommodate the ring, which is to be manipulated or positioned, accordingly to suit its cross-sectional shape.

5. Device as claimed in Claim 4, **characterised in that** the end surface of the gripper is provided with at least one jaw (12, 14, 16) which axially strips the ring, brought into the position, from the fingers and/or presses said ring into the position.

6. Device as claimed in Claim 5, **characterised in that** several fingers (23, 26) are mounted in the jaw in an axially resilient manner.

7. Device as claimed in Claim 6, **characterised in that** several jaws which are the same length and spaced apart in the circumferential direction are attached to the end surface of the gripper, wherein fingers arc mounted in each of the jaws in an axially resilient manner.

8. Device as claimed in any one or several of Claims 5 to 7, **characterised in that** the jaw or all the jaws is/are radially movable in relation to a centre line (10) of the gripper.

9. Device as claimed in any one or several of Claims 4 to 8, **characterised in that** a stroke limiter (35, 37) is provided for an axial movement of the fingers relative to the associated jaw (12).

10. Device as claimed in Claim 9, **characterised in that** a dedicated stroke limiter for each finger is provided in each jaw.

11. Device as claimed in any one or several of Claims 4 to 10, **characterised in that** each finger comprises a substantially planar front surface (27, 28) at its free end.

## Revendications

1. Procédé pour introduire une bague (50) élastique prédéfinie dans une position prédéfinie, qui est définie par une rainure annulaire (52) emboîtée dans une surface sensiblement plane, avec lequel la bague est saisie sur son pourtour intérieur par plusieurs doigts (21, 22, 23, 24, 25, 26) espacés dans le sens périphérique et mobiles dans le sens radial, et est amenée sur la position, une partie de tige (31) se raccordant axialement étant mise à disposition sur chaque doigt sur son extrémité libre, partie dont la conception est adaptée sous la forme d'un profilé, d'une entaille ou d'une gorge, pour le logement de la bague à manipuler ou à introduire de façon appropriée à sa forme de section, et la bague étant réceptionnée en dépassant radialement au moins partiellement de la partie de tige.

2. Procédé selon la revendication 1, **caractérisé en ce que** la bague amenée sur la position est appuyée par au moins une mâchoire (12, 14, 16) mobile axialement dans la position.

3. Procédé selon la revendication 1 ou 2, **caractérisé en ce que** la bague amenée sur la position est raclée axialement par au moins une mâchoire (12, 14, 16) mobile axialement par les doigts.

4. Dispositif pour mettre en oeuvre le procédé selon l'une quelconque ou plusieurs des revendications 1 à 3, présentant une pince (1, 7), sur la surface avant (8) de laquelle sont prévus plusieurs doigts (21, 22, 23, 24, 25, 26) espacés dans le sens périphérique et mobiles radialement, dont l'extrémité (31) libre est conçue sur son pourtour intérieur pour la saisie par adhérence ou complémentarité de formes de la bague (50), et une commande de mouvement (40) mécanique et/ou électronique pour les doigts, chaque doigt présentant une partie de tige (31) se raccordant axialement sur son extrémité libre, partie dont la conception est adaptée sous la forme d'un profilé, d'une entaille ou une gorge pour le logement de la bague à manipuler ou à introduire de façon appropriée à sa forme de section.

5. Dispositif selon la revendication 4, **caractérisé en ce que** sur la surface avant de la pince est présente au moins une mâchoire (12, 14, 16), qui racle axialement la bague amenée sur la position par les doigts et/ou l'appuie dans la position.

6. Dispositif selon la revendication 5, **caractérisé en ce que** plusieurs doigts (23, 26) sont logés de façon axialement élastique dans la mâchoire.

7. Dispositif selon la revendication 6, **caractérisé en ce que** plusieurs mâchoires espacées dans le sens périphérique et de longueur identique sont fixées sur la surface frontale de la pince, des doigts étant logés de façon axialement élastique dans chacune des mâchoires.

8. Dispositif selon l'une quelconque ou plusieurs des revendications 5 à 7, **caractérisé en ce que** la mâchoire ou toutes les mâchoires est/sont mobile(s) radialement par rapport à une ligne médiane (10) de la pince.

9. Dispositif selon l'une quelconque ou plusieurs des revendications 4 à 8, **caractérisé en ce qu'**une limitation de course (35, 37) est prévue pour un mouvement axial des doigts par rapport à la mâchoire (12) spécifique.

10. Dispositif selon la revendication 9, **caractérisé en ce qu'**une limitation de course propre est prévue pour chaque doigt.

11. Dispositif selon l'une quelconque ou plusieurs des revendications 4 à 10, **caractérisé en ce que** chaque doigt présente une surface frontale (27, 28) sensiblement plane sur son extrémité libre.
